# EUROPÄISCHE PATENTSCHRIFT

(11) **EP 1 013 324 B1**
(45) Veröffentlichungstag und Bekanntmachung des Hinweises auf die Patenterteilung: **12.01.2005**
(21) Anmeldenummer: 99810993.8
(22) Anmeldetag: 02.11.1999
(51) Int. Cl.: B01D 3/00, B01D 53/18

(54) **Gegenstromkolonne mit Flüssigkeitsverteiler**
Counter-current column with liquid distributor
Colonne à contre-courant avec distributeur de liquide

(30) Priorität: 30.11.1998 EP 98811188
(43) Veröffentlichungstag der Anmeldung: 28.06.2000
(73) Patentinhaber: Sulzer Chemtech AG, 8404 Winterthur (CH)
(72) Erfinder: Fischer, Markus, 78462 Konstanz (DE); Moser, Felix, 8408 Winterthur (CH)
(74) Vertreter: Sulzer Management AG

(56) Entgegenhaltungen:
- EP-A- 0 070 917
- EP-A- 0 282 753
- EP-A- 0 289 201
- US-A- 4 427 605

## Beschreibung

Die Erfindung betrifft eine Gegenstromkolonne mit Flüssigkeitsverteiler gemäss Oberbegriffen der Ansprüche 1 oder 2; sowie ein Verfahren zum Bertreiben der Kolonne.

In einer derartigen Kolonne, in der beispielsweise eine destillative Stofftrennung mittels einer geordneten Packung durchgeführt wird, kann ein Gas, das durch die Packung nach oben strömt, sich so schnell bewegen, dass bei Verwendung von bekannten Flüssigkeitsverteilern (siehe z. B. EP 0 282 753) an diesen durch die heftige Gasströmung feine Tropfen abgetrennt und mitgerissen werden. Die zu verteilende Flüssigkeit gelangt daher nicht verlustfrei auf die Packung, sondern wird teilweise durch die Gasströmung von dieser weggeführt (oft "Entrainment" genannt). Geordnete Packungen, in denen starke Gasströmungen auftreten können, sind beispielsweise Wirbelpackungen (siehe EP 0 418 338) oder Packungen mit Kreuzkanalstruktur, d. h. Packungen mit in vertikalen Lagen angeordneten Folien, die gewellt sind und dabei sich offen kreuzende Kanäle bilden (siehe z. B. EP 0 070 917).

Aufgabe der Erfindung ist es, eine Gegenstromkolonne mit einem Flüssigkeitsverteiler zu schaffen, in der auch bei einer starken Gasströmung die Abgabe einer zu verteilenden Flüssigkeit auf die Packung weitgehend verlustfrei erfolgt. Diese Aufgabe wird durch die in den Ansprüchen 1 und 2 definierten Kolonnen gelöst.

Die Gegenstromkolonne enthält einen Flüssigkeitsverteiler, der eine Mehrzahl von rohr- oder trogförmigen Verteilorganen umfasst. Diese Verteilorgane sind in der Kolonne über einer Packung derart angeordnet, dass in einem nach oben strömenden Gas auf der Höhe der Verteilorgane sich mehrere Teilströme ausbilden. Es liegen Stauzonen zwischen der Packung und den Verteilorganen vor. Durch zusätzliche Mittel, die für eine Flüssigkeitsabgabe an sich nicht nötig sind, werden die Stauzonen und/oder die Strömung einer zu verteilenden Flüssigkeit so beeinflusst, dass die Flüssigkeit nach Austritt aus den Verteilorganen und vor Eintritt in die Packung frei fallend die Stauzonen und gegebenenfalls auch weitere Bereiche durchqueren, in denen die Gasströmung weitgehend frei von horizontalen Geschwindigkeitskomponenten ist. Die Gasströmung kann auch mittels einer geeigneten Formgebung der Verteilorgane beeinflusst werden.

Die abhängigen Ansprüche 3 bis 10 beziehen sich auf erfindungsgemässe Kolonnen mit vorteilhaften Ausführungsformen der Flüssigkeitsverteiler.

Nachfolgend wird die Erfindung anhand der Zeichnungen erläutert. Es zeigen:
- Fig. 1: den oberen Teil einer erfindungsgemässen Gegenstromkolonne,
- Fig. 2: Verteilorgane der Kolonne von Fig. 1 mit einer Darstellung der Gasströmung,
- Fig. 3: eine abgeschirmte Austrittsstelle eines Verteilorgans,
- Fig. 4: ein trogförmiges Verteilorgan einer erfindungsgemässen Kolonne,
- Fig. 5: ein zweites Ausführungsbeispiel zu einem trogförmigen Verteilorgan,
- Fig. 6: drei weitere Varianten,
- Fig. 7: ein Verteilorgan mit frei fallenden Flüssigkeitsstrahlen und Lenkoder Verdrängungskörper für die Gasströmung und
- Fig. 8: zwei weitere Varianten von Verteilorganen.

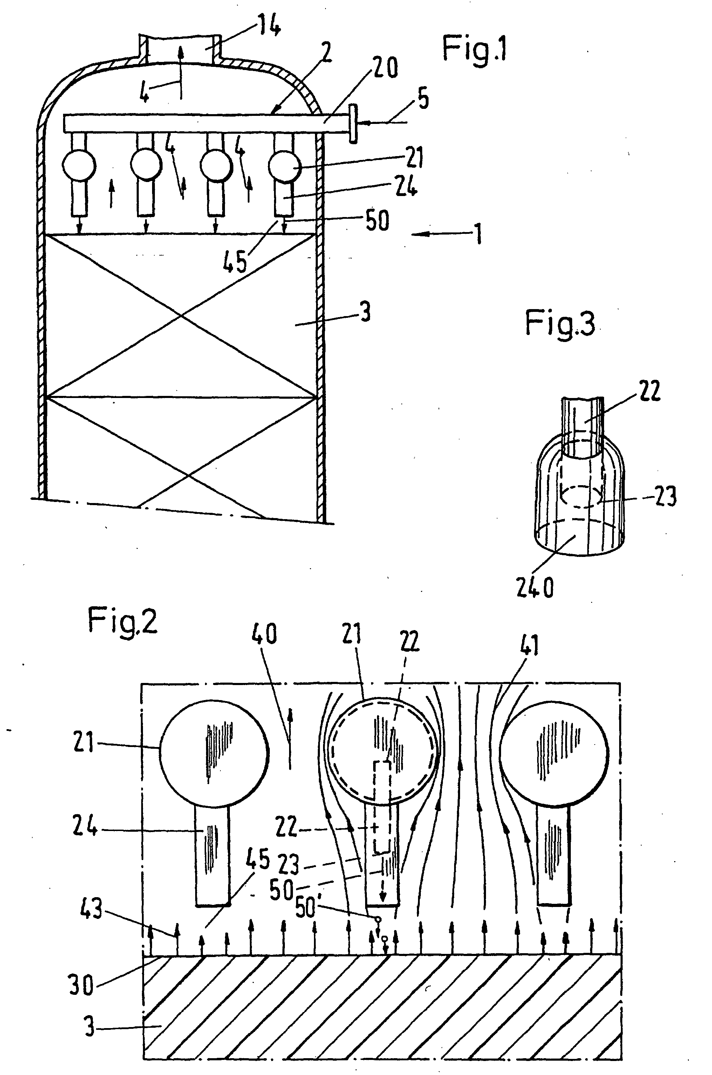

Die in Fig. 1 gezeigte Kolonne 1 umfasst einen Flüssigkeitsverteiler 2 mit Verteilorganen 21 und eine Packung 3, durch die ein Gas 4 nach oben zu einem Abzugsrohr 14 strömt. Im Verteiler 2 wird eine Flüssigkeit 5 über ein Rohr 20 zu den einzelnen Verteilorganen 21 zugeführt. Das Gas 4 wird im Bereich der Verteilorgane 21 vorübergehend in Teilströme 40 getrennt. Entsprechend bilden sich Stauzonen 45 im Bereich zwischen der Packung 3 und den Verteilorganen 21 aus. Ein Abschirmmittel 24 beeinflusst die Strömung des Gases 4 so, dass diese unterhalb des Verteilorgans 21 in einer Zone, die die Flüssigkeit 5 als frei fallende Flüssigkeit 50 durchquert, weitgehend frei von horizontalen Geschwindigkeitskomponenten ist. Tropfen 50' der Flüssigkeit 50 (siehe Fig. 2) werden daher durch das Gas 4 nicht nach oben mitgerissen. Die Flüssigkeit gelangt verlustfrei auf die Packung 3.

In Fig. 2 sind die Verhältnisse im strömenden Gas 4 in einer Zone über der Oberfläche 30 der Packung 3 mit eingezeichneten Strömungslinien 41 qualitativ illustriert. Das Gas tritt weitgehend gleichmässig aus der Packung aus (Pfeile 43). Die zu verteilende Flüssigkeit 5 wird von den Verteilorganen 21 über eine Vielzahl von Röhrchen 22 und durch Austrittsöffnungen 23 abgegeben. Die Abschirmmittel 24 beeinflussen die Gasströmung derart, dass sich unterhalb der Öffnungen 23 Stauzonen 45 ausbilden. Die zu verteilende Flüssigkeit 5, die in Tropfen 50' zerfallen sein kann, trifft verlustfrei auf der Packung 3 auf. Die frei fallende Flüssigkeit 50 kann auch in Form von Strahlen oder vorhangartigen Filmen vorliegen.

Die Abschirmmittel 24 können Wandelemente sein, die sich jeweils über die gesamte Länge der Verteilorgane 21 erstrecken. Sie können aber beispielsweise auch jeweils nur einer Austrittsöffnung 23 zugeordnet sein, wie es mit dem in Fig. 3 gezeigten glockenförmigen Abschirmmittel 240 der Fall ist. Wichtig bei diesen Abschirmmitteln 24 ist, dass deren innere Oberfläche nicht von der abgegebenen Flüssigkeit 50 benetzt wird. Denn eine so fehlgeleitete Flüssigkeit würde an untere Kanten des Abschirmmittels 24 gelangen, dort abtropfen und von der Gasströmung 43 erfasst werden, wobei ein Teil der Flüssigkeit aufgrund von horizontalen Geschwindigkeitskomponenten mitgerissen werden könnte.

In Fig. 4 ist ausschnittsweise ein trogförmiges Verteilorgan 21 dargestellt, bei dem anschliessend an Öffnungen 23, durch die Flüssigkeit 5 abgegeben wird, eine Leitwand 25 angeordnet ist, über welche die Flüssigkeit 5 beidseitig in Form von Filmen abfliessen kann. Die Leitwand 25 weist zur günstigen Beeinflussung der Flüssigkeitsfilme eine Strukturierung auf: Rillen 251a und Perforierungen 252a beeinflussen die horizontale Verteilung der Filme. Diese Strukturierungselemente müssen nicht in Kombination vorliegen, können auch an anderen Stellen der Leitwand 25 vorgesehen sein oder weggelassen werden. Die Abtropfkante 253 ist mit Zacken 253a versehen, kann aber auch eine glatte horizontale Kante sein.

Die Leitwand 25 hat in einem vertikalen Schnitt, der senkrecht zur Längserstreckung des Verteilorgans 21 steht, im wesentlichen die Form einer sigmoiden Kurve, d.h. einer Kurve, die eine Wendestelle ihrer Krümmung aufweist. Diese Kurve ist beim gezeigten Beispiel weitgehend durch einen Streckenzug gegeben. Ein vertikales Wandstück 250 geht in ein gegen die Mitte des Verteilorgans 21 geneigtes Wandstück 251 über; an dieses schliesst ein zweites vertikales Wandstück 252 an, dessen unterer Rand eine Abtropfkante 253 bildet. Am oberen Rand des Wandstücks 250 dienen laschenartige Stücke 250a als Befestigungsmittel für die Leitwand 24 und als Leitmittel für eine abzugebene Flüssigkeit. Es sind selbstverständlich auch andere Befestigungsarten möglich.

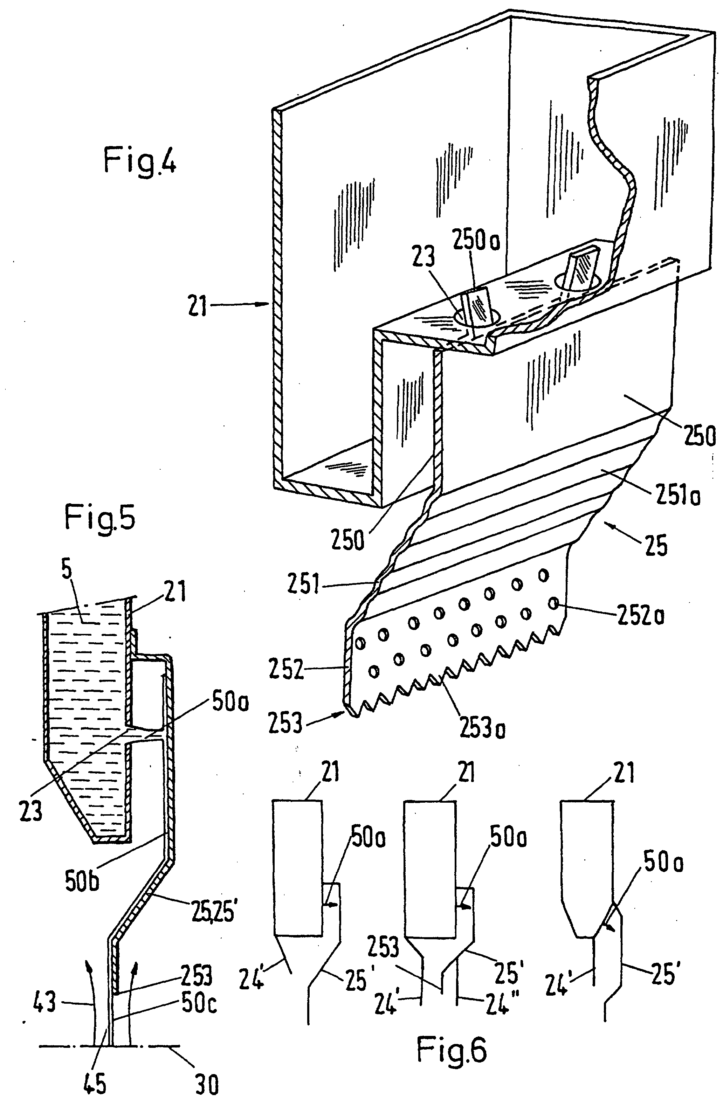

Im Ausführungsbeispiel der Fig. 5 ist die Leitwand 25 als Prallwand 25' ausgebildet. Die aus der Öffnung 23 austretende Flüssigkeit 5 trifft strahlförmig (Strahl 50a) auf der Prallwand 25' auf und geht dabei in einen Film 50b über, der anschliessend frei fallend (Film 50c) von der Abtropfkante 253 durch eine Stauzone 45 zur Oberfläche 30 der Packung 3 gelangt.

Das Verteilorgan 21 und die Leitwand 25 oder Prallwand 25' werden mit Vorteil so geformt, dass in der Umgebung der Stauzone 45 die Strömung 43 weitgehend spiegelsymmetrisch ausgebildet ist, nämlich mit der vertikalen Ebene durch die Abtropfkante 253 als Symmetrieebene. Um dies zu erreichen, ist die Prallwand 25 sigmoid geformt und die linke Flanke des Verteilorgans 21 angefast, so dass dessen Trog im unteren Bereich sich keilförmig nach unten verjüngt.

Die Leitwand 25 oder Prallwand 25' ist am Verteilorgan 21 beispielsweise angeschraubt, angeschweisst (z. B. Punktschweissung) oder angelötet.

Fig. 6 zeigt sehr schematisch drei Beispiele von Verteilorganen 21, bei denen flankierend zu der Leitwand 25 zusätzlich mindestens eine Schürze 24' zwecks Beeinflussung der Gasströmung vorgesehen ist. Beim zweiten Beispiel befindet sich die Abtropfkante 253 in einem geschützten Bereich zwischen zwei Schürzen 24' und 24". Die strahlförmig abgegebene Flüssigkeit 50a ist durch Pfeile angedeutet.

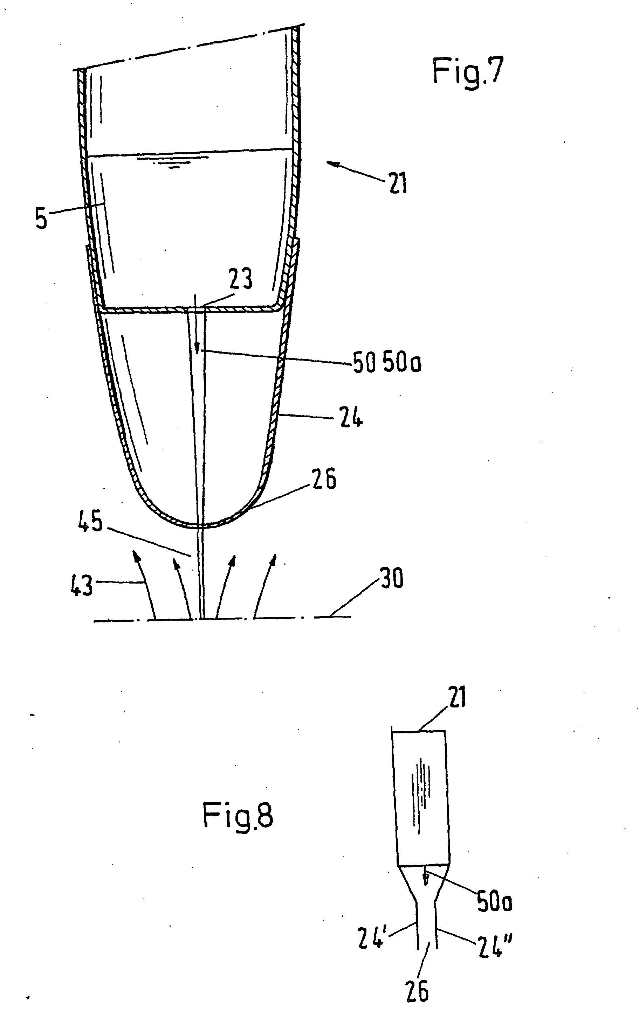

In Fig. 7 ist der Austrittsbereich eines Verteilorgans 21 dargestellt, dessen Abschirmmittel 24 ein Verdrängungskörper ist, der aus einer parabolisch gebogenen Folie gebildet ist. Die durch die Bodenöffnung 23 abströmende Flüssigkeit 50 durchquert als Strahl 50a einen Durchbruch 26 des Verdrängungskörpers 24, ohne in Kontakt mit dessen Oberfläche zu gelangen, und bewegt sich weiter durch die Stauzone 45 der Gasströmung 43 zur Packungsoberfläche 30.

Der Abstand zwischen dem Verteilorgan 21, im speziellen dem Scheitel des Verdrängungskörpers 24, und der Packungsoberfläche 30 ist mit Vorteil so gross gewählt, dass die Stauzone 45 weitgehend ausserhalb der Packung 3 zu liegen kommt. Bei einem solchen Abstand werden in der Packung 3 die Strömungsverhältnisse durch das Verteilorgan nicht ungünstig beeinflusst.

Statt des Verdrängungskörpers 24 in Fig. 7 können auch zwei Schürzen 24', 24" vorgesehen sein, wie es im ersten Beispiel der Fig. 8 gezeigt ist.

## Patentansprüche

1. Gegenstromkolonne (1) mit einem Flüssigkeitsverteiler (2), der eine Mehrzahl von rohroder trogförmigen Verteilorganen (21) umfasst, die im wesentlichen horizontal über den Querschnitt der vertikal ausgerichteten Kolonne verteilt über einer Packung (3) angeordnet sind und jeweils mehrere Austrittsöffnungen (23) aufweisen, **dadurch gekennzeichnet, dass** die Austrittsöffnungen mittig im Boden der Verteilorgane vorgesehen sind und mit Abstand um die Austrittsöffnungen Abschirmflächen (24, 24', 24", 240) vorgesehen sind, die einen oder mehrere Räume bilden, welche von oben ausschliesslich durch eine oder mehrere Austrittsöffnungen zugänglich sind und sich nach unten so öffnen, dass aus den Austrittsöffnungen fallende Flüssigkeit die Abschirmflächen nicht benetzt.

2. Gegenstromkolonne (1) mit einem Flüssigkeitsverteiler (2), der eine Mehrzahl von rohroder trogförmigen Verteilorganen (21) umfasst, die im wesentlichen horizontal über den Querschnitt der vertikal ausgerichteten Kolonne verteilt über einer Packung (3) angeordnet sind und jeweils mehrere Austrittsöffnungen (23) aufweisen, wobei an jedem Verteilorgan eine separate Leitwand (25, 25') vorgesehen ist, **dadurch gekennzeichnet, dass** sich die Leitwand vom Bereich vor den Austrittsöffnungen bis vertikal unterhalb des Verteilorgans erstreckt, wo die Umlenkfläche zu einer Vertikalebene durch das Verteilorgan hin gebogen ist und einen vertikal verlaufenden Endbereich (252) aufweist.

3. Kolonne nach Anspruch 2, **dadurch gekennzeichnet, dass** die Leitwand (25) als Prallplatte (25') für aus den Öffnungen (23) austretende Flüssigkeitsstrahlen (50a) ausgebildet ist.

4. Kolonne nach einem der Ansprüche 2 oder 3, **dadurch gekennzeichnet, dass** die Leitwand (25) eine Strukturierung (251 a, 251 b) aufweist, die auf den Flüssigkeitsfilm (50b) eine dessen horizontale Verteilung beeinflussende Wirkung hat, und dass eine Abtropfkante (253, 253a) gezackt ausgebildet sein kann.

5. Kolonne nach einem der Ansprüche 2 bis 4, dadurch gekenntzeichnet, dass die Leitwand (25) in einem vertikalen Schnitt, der senkrecht zur Längserstreckung des Verteilorgans (21) steht, die Form einer sigmoiden Kurve hat, wobei diese Kurve auch.teilweise geradlinige Abschnitte aufweisen kann.

6. Kolonne nach einem der Ansprüche 1 bis 5, **dadurch gekennzeichnet, dass** das Verteilorgan (21) trogförmig ist und zu der Beeinflussung der Gasströmung eine angefaste Flanke (214) aufweist.

7. Kolonne nach einem der Ansprüche 2 bis 5, **dadurch gekennzeichnet, dass** am Verteilorgan (21) flankierend zu der Leitwand (25) zusätzlich mindestens eine Schürze (24', 24") zu der Beeinflussung der Gasströmung vorgesehen ist.

8. Kolonne nach einem der Ansprüche 1 bis 7, **dadurch gekennzeichnet, dass** die Abstände zwischen den Verteilorganen (21, 24) und der Packungsoberfläche (30) so gross ist, dass die Stauzonen (45) weitgehend ausserhalb der Packung (3) liegen.

9. Kolonne nach einem der Ansprüche 1 bis 8, **dadurch gekennzeichnet, dass** im Bereich der Stauzonen (45) die Teilströme (40) weitgehend spiegelsymmetrisch zueinander und bezüglich vertikalen Ebenen durch Abtropfkanten (253) ausgebildet sind.

10. Kolonne nach einem der Ansprüche 7 bis 9, **dadurch gekennzeichnet, dass** der Verteiler (1) über einer Packung (3) angeordnet ist, die eine geordnete Struktur aufweist, wobei insbesondere die Packung eine "Wirbelpackung" oder eine Packung mit "Kreuzkanalstruktur" ist.

11. Gegenstromkolonne (1) mit einem Flüssigkeitsverteiler (2), der eine Mehrzahl von rohr- oder trogförmigen Verteilorganen (21) umfasst, die in der Kolonne über einer Packung (3) derart angeordnet sind, dass in einem nach oben strömenden Gas (4) auf der Höhe der Verteilorgane mehrere Teilströme (40), ausgebildet werden wobei sich Stauzonen (45) zwischen der Packung und den Verteilorganen ergeben, **dadurch gekennzeichnet, dass** durch Abschirmmittel (24) oder mittels einer geeigneten Formgebung der Verteilorgane die Gasströmung und damit die Stauzonen und/oder durch Leitwände (25) die Strömung einer zu verteilenden Flüssigkeit (5) so beieinflusst werden, dass die Flüssigkeit (50) nach Austritt aus den Verteilorganen und vor Eintritt in die Packung frei fallend die Stauzonen und gegebenenfalls auch weitere Bereiche durchquert, in denen die Gasströmung frei von horizontalen Geschwindigkeitskomponenten ist, aufgrund derer Tropfen (50') nach oben gerissen würden.

## Claims

1. Counterflow column (1) having a liquid distributor (2) which includes a plurality of tubular or trough-like distributor members (21) which are arranged in a column above a packing (3) substantially horizontally over the cross-section of the vertically aligned column and which each have a plurality of outlet openings (23), **characterised in that** the outlet openings are provided in the centre in the base of the distributor members and **in that** screening surfaces (24, 24', 24", 240) are provided spaced apart around the outlet openings and form one or more spaces which are accessible from above only through one ore more outlet openings and open downwardly such that liquid falling out of the outlet openings does not wet the screening surfaces.

2. Counterflow column (1) having a liquid distributor (2) which includes a plurality of tubular or trough-like distributor members (21) which are arranged in a column above a packing (3) substantially horizontally over the cross-section of the vertically aligned column and which each have a plurality of outlet openings (23), wherein a separate guide wall (25, 25') is provided at each distributor member, **characterised in that** the guide wall extends from the region in front of the outlet openings up to vertically beneath the distributor member when the deflection surface is bent to a vertical plane by the distributor member and has a vertically extending end region (252).

3. Column in accordance with claim 2, **characterised in that** the guide wall (25) is formed as a baffle plate (25') for liquid jets (50a) which emerge from the openings (23).

4. Column in accordance with any one of the claims 2 or 3, **characterised in that** the guide wall (25) has a structure (251a, 251b) which has an effect on the liquid film (50b) which influences its horizontal distribution; and **in that** a drip edge (253, 253a) can be made in a toothed form.

5. Column in accordance with any one of the claims 2 to 4, **characterised in that**, in a vertical section which is perpendicular to the longitudinal extent of the distributor member (21), the guide wall (25) can have the shape of a sigmoid curve, with it being possible for this curve also to have some straight-line sections.

6. Column in accordance with any one of the claims 1 to 5, **characterised in that** the distributor member (21) is trough shaped and has a chamfered flank (214) for the influencing of the gas flow.

7. Column in accordance with one of the claims 2 to 5, **characterised in that** at least one apron (24', 24") is additionally provided at the distributor member (21) flanking the guide wall (25) for the influencing of the gas flow.

8. Column in accordance with one of the claims 1 to 7, **characterised in that** the spacings between the distributor members (21, 24) and the packing surface (30) are so large that the stagnation zones (45) lie largely outside the packing (3).

9. Column in accordance with one of the claims 1 to 8, **characterised in that**, in the region of the stagnation zones (45), the partial flows (40) are made largely mirror symmetrically with respect to one another and with respect to vertical planes through drip edges (253).

10. Column in accordance with one of the claims 7 to 9, **characterised in that** the distributor (1) is arranged above a packing (3) which has an ordered structure, with the packing in particular being a "turbulence packing" or a packing with "cross channel structure".

11. A counterflow column (1) having a liquid distributor (2) which includes a plurality of tubular or trough-like distributor members (21) which are arranged in a column above a packing (3) such that a plurality of partial flows (40) are formed in an upwardly flowing gas (4) at the level of the distributor members, with stagnation zones (45) being present between the packing and the distributor members, **characterised in that** the gas flow, and thus the liquid (50), after emerging from the distributor members and prior to entry into the packing, traverses in free fall the stagnation zones and, optionally, also further regions in which the gas flow is largely free of horizontal velocity components, due to which drops (50') would be carried upwardly along.

## Revendications

1. Colonne à contre-courant (1) avec un distributeur de liquide (2) qui comprend plusieurs organes de distribution (21) en forme de tube ou d'auge qui, en étant répartis sensiblement horizontalement sur la section transversale de la colonne orientée verticalement, sont disposés au-dessus d'un garnissage (3) et présentent chacun plusieurs ouvertures de sortie (23), **caractérisée en ce que** les ouvertures de sortie sont prévues au milieu dans le fond des organes de distribution et, à un écart autour des ouvertures de sortie, des faces formant écran (24,24',24", 240) sont prévues qui forment une ou plusieurs enceintes qui sont accessibles depuis au-dessus exclusivement à travers une ou plusieurs ouvertures de sortie et qui s'ouvrent vers le bas de sorte que le liquide tombant des ouvertures de sortie ne mouille pas les faces formant écran.

2. Colonne à contre-courant (1) avec un distributeur de liquide (2), qui comprend plusieurs organes de distribution (21) en forme de tube ou d'auge qui, en étant répartis sensiblement horizontalement sur la section transversale de la colonne orientée verticalement, sont disposés au-dessus d'un garnissage(3) et présentent chacun plusieurs ouvertures de sortie (23), où est prévue à chaque organe de distribution une paroi de guidage séparée (25,25'), **caractérisée en ce que** la paroi de guidage s'étend de la zone devant les ouvertures de sortie jusque verticalement en dessous de l'organe de distribution, où la face de déviation est courbée vers un plan vertical par l'organe de distribution et présente une zone d'extrémité (252) s'étendant verticalement.

3. Colonne selon la revendication 2, **caractérisée en ce que** la paroi de guidage (25) est réalisée comme paroi de rebondissement (25') pour des jets de liquide (50a) sortant des ouvertures (23).

4. Colonne selon l'une des revendications 2 ou 3, **caractérisée en ce que** la paroi de guidage (25) présente une structuration (251a,251b) qui a sur le film de liquide (50b) un effet agissant sur sa répartition horizontale, et **en ce qu'**une arête d'égouttement (253,253a) peut être réalisée de manière dentée.

5. Colonne selon l'une des revendications 2 à 4, **caractérisée en ce que** la paroi de guidage (25) présente en une coupe verticale s'étendant perpendiculairement à l'extension longitudinale de l'organe de distribution (21), la forme d'une courbe sigmoïde, où cette courbe peut également présenter en partie des segments rectilignes.

6. Colonne selon l'une des revendications 1 à 5, **caractérisée en ce que** l'organe de distribution (21) est en forme d'auge et présente, pour agir sur l'écoulement du gaz, un flanc chanfreiné (214).

7. Colonne selon l'une des revendications 2 à 5, **caractérisée en ce qu'**il est prévu à l'organe de distribution (21), en flanquant la paroi de guidage (25), additionnellement au moins un tablier (24',24") pour agir sur l'écoulement du gaz.

8. Colonne selon l'une des revendications 1 à 7, **caractérisée en ce que** les écarts entre les organes de distribution (21,24) et la surface de garnissage (30) sont suffisamment grands pour que les zones de refoulement (45) se situent sensiblement à l'extérieur du garnissage (3).

9. Colonne selon l'une des revendications 1 à 8, **caractérisée en ce qu'**au voisinage des zones de refoulement (45), les flux partiels (40) sont réalisés sensiblement d'une manière spéculairement symétrique les uns aux autres et sont réalisés relativement aux plans verticaux par des arêtes d'égouttement (253).

10. Colonne selon l'une des revendications 7 à 9, **caractérisée en ce que** le distributeur (1) est disposé au-dessus d'un garnissage (3) qui présente une structure ordonnée, où en particulier le garnissage est un "garnissage fluidisé" ou un garnissage avec une "structure de canaux croisés".

11. Procédé pour faire fonctionner une colonne à contre-courant (1) avec un distributeur de liquide (2) qui comporte plusieurs organes de distribution (21) en forme de tube ou d'auge, qui sont disposés dans la colonne au-dessus d'un garnissage (3) de façon que dans un gaz (4) s'écoulant vers le haut, au niveau des organes de distribution, plusieurs flux partiels (40) sont formés, où se produisent des zones de refoulement (45) entre le garnissage et les organes de distribution, **caractérisé en ce que** par des moyens formant écran (24) ou au moyen d'une configuration appropriée des organes de distribution, le flux de gaz et donc les zones de refoulement et/ou par des parois de guidage (25), l'écoulement d'un liquide à distribuer (5) sont soumis à une telle influence que le liquide (50) après la sortie des organes de distribution et avant l'entrée dans le garnissage, traverse, en tombant librement, les zones de refoulement et le cas échéant également d'autres zones dans lesquelles le flux de gaz est exempt de composantes de vitesse horizontales en raison desquelles des gouttes (50') seraient entraînées vers le haut.
